# EUROPÄISCHE PATENTSCHRIFT

(11) **EP 4 314 588 B1**
(45) Veröffentlichungstag und Bekanntmachung des Hinweises auf die Patenterteilung: **24.12.2025**
(21) Anmeldenummer: 22711052.5
(22) Anmeldetag: 08.03.2022
(51) Int. Cl.: F16D 25/10, F16D 25/0638, B60K 6/387

(54) **MEHRFACHLAMELLENKUPPLUNGSANORDNUNG MIT BLECHKOLBEN ZUR BETÄTIGUNG DER KUPPLUNGEN, INSBESONDERE EINE DREIFACHLAMELLENKUPPLUNG**
ASSEMBLY WITH SEVERAL MULTIPLE LAMELLAE CLUTCHES WITH PISTONS OF SHEET METAL FOR THE ACTUATION OF THE CLUTCHES, IN PARTICULAR AN ASSEMBLY WITH THREE MULTIPLE LAMELLAE CLUTCHES
ENSEMBLE AVEC PLUSIEURS EMBRAYAGES À LAMELLES MULTIPLES AVEC PISTONS EN TÔLE, NOTAMMENT UN ENSEMBLE AVEC TROIS EMBRAYAGES À LAMELLES MULTIPLES

(30) Priorität: 29.03.2021 DE 102021203149; 06.07.2021 DE 102021207080
(43) Veröffentlichungstag der Anmeldung: 07.02.2024
(73) Patentinhaber: Magna PT B.V. & Co. KGaA, 74199 Untergruppenbach (DE)
(72) Erfinder: GREMPLINI, Hansi, 74379 Ingersheim (DE); COKDOGRU, Inan, 74924 Neckarbischofsheim (DE); MUELLER, Sarah, 71566 Althuette (DE)
(74) Vertreter: Euler, Matthias
(86) Internationale Anmeldenummer: PCT/EP2022/055847
(87) Internationale Veröffentlichungsnummer: WO 2022/207252

(56) Entgegenhaltungen:
- EP-A1- 3 879 133
- WO-A1-2021/099070
- DE-A1- 102004 027 088
- DE-A1- 102009 039 223
- DE-A1- 102014 014 985
- DE-A1- 102015 202 526
- DE-A1- 102018 122 377
- DE-A1- 102020 105 901
- FR-A1- 3 097 917
- JP-A- 2016 001 033

## Beschreibung

Die vorliegende Erfindung betrifft eine Mehrfachlamellenkupplungsanordnung mit mindesten zwei Reibkupplungen, die radial versetzt zueinander angeordnete Lamellenpakte auf Lamellenträgern aufweisen, mit Kolben, die zur Aktuierung der Reibkupplungen dienen, wobei die Kolben Druckräume gegen Fliehölausgleichsräumen abgrenzen.

### Stand der Technik

Doppelkupplungen für einen Antriebsstrang sind beispielsweise aus der EP 2 905 492 B1 bekannt. Solche Kupplungsanordnungen dienen in Kraftfahrzeugantriebssträngen dazu, einen Antriebsmotor wie einen Verbrennungsmotor mit einem Getriebe wie einem Stufengetriebe zu verbinden. Die darin enthaltene Kupplung dient beispielsweise zum Anfahren und/oder zum Unterbrechen des Leistungsflusses, sofern in dem Getriebe eine Gangstufe gewechselt werden soll. Bei nasslaufenden Reibkupplungen ist es bekannt, diese fluidisch zu betätigen. Hierzu ist es ebenfalls bekannt, eine Drehdurchführung zwischen einem Gehäusezapfen und einem Nabenglied vorzusehen, wobei über die Drehdurchführung Fluid zum Kühlen und zur Betätigung der Kupplung bereitgestellt wird.

Bei einem solchen offenen System versucht man, die teilweise störenden Fliehkrafteinflüsse auf rotierende Betätigungskolben, nämlich Druckerhöhungen aufgrund des bei Rotation aufgrund der Fliehkraft nach außen geschleuderten zur Betätigung der Kupplung vorgesehenen Kühlöls, durch die Bereitstellung entsprechender Kompensationsräume auszugleichen, in denen ein entsprechender Gegendruck erzeugt wird. Der Betätigungskolben ist dann als Folge beidseitig von Ölräumen umgeben, was zu einem guten Fliehölausgleich führt. Die Ölräume sind dabei Druckölräume und Fliehölausgleichsräume, wobei letzterer von Fliehölausgleichskolben gebildet wird. Als Fliehöl wird der Teil des Kühlöl bezeichnet, der durch Fliehkraft bewegt wird.

Solche Doppelkupplungen werden auch für die hybridische Antriebssystem in einem Doppelkupplungsgetriebe verwendet. So ist beispielsweise aus der DE 10 2010 004 711 B1 ein Design mit einer an einem der beiden Teilgetriebe angebundenen elektrischen Maschine bekannt.

Die Anbindung der elektrischen Maschine an eine der Teilgetriebe, dem zweiten Teilgetriebe TG2 mit den Gangstufen 2/4/6 oder dem ersten Teilgetriebe TG1 mit den Gangstufen 1/3/5/7, erlaubt keine Schaltung im rein elektrischen Betrieb ohne Zugkraftunterbrechung. Eine Schaltung im rein elektrischen Betrieb kann in einem 2,5 Hybridtyp entweder mit Zugkraftunterbrechung oder über ein Stützmoment des Verbrennungsmotors erfolgen. Damit kann die Vermeidung von Abgasen nicht sichergestellt werden, was für den Messzyklus eines Hybridfahrzeugs nachteilig ist.

In einem P2 Hybridtyp treten die Probleme nicht auf, allerdings erfordert die P2 Konfiguration eine weitere Kupplung K0 zwischen Verbrennungsmotor und elektrischer Maschine. Allerdings ist der Bauraum begrenzt, so dass eine Dreifachlamellenkupplung zum Einsatz kommt. Alle verwendeten Bauteile müssen für den geringen Bauraum optimiert sein, wobei auch die Herstellungs- und/oder Montagekosten eine Rolle spielen.

Eine dreifache Kupplung ist beispielsweise aus der DE 10 2019 104 073 A1 bekannt.

DE 10 2018 122 377 A1 zeigt eine Kupplungsanordnung mit mindestens zwei Reibkupplungen. Mindestens einer der Kolben, ist aus Blech hergestellt. Dieser Kolben weist eine Dichtung auf, die angespritzt ist. Eine weitere Dichtung ist dagegen am Gehäuse selbst angespritzt. In Kombination wird somit ein Druckraum abgedichtet.

FR 3 097 917 A1 zeigt eine Kupplungsanordnung mit drei Reibkupplungen die radial zueinander versetzt angeordnet sind.

Es ist Aufgabe der Erfindung eine Mehrfachlamellenkupplungsanordnung insbesondere einen Dreifachlamellenkupplung bereitzustellen, bei der optimierte Ausgestaltungen der Kolben mit Dichtfunktionen zum Einsatz kommt.

### Beschreibung der Erfindung

Die Aufgabe wird gelöst mit einer Mehrfachlamellenkupplungsanordnung mit mindesten zwei Reibkupplungen, die radial versetzt zueinander angeordnete Lamellenpakte auf Lamellenträgern aufweisen, mit Kolben zur Aktuierung der Reibkupplungen dienen, wobei die Kolben Druckräume gegen Fliehölausgleichsräumen abgrenzen, dadurch gekennzeichnet, dass mindesten einer der Kolben aus Blech einteilig hergestellt ist.

Erfindungsgemäß weisen die Kolben Abdichtungen auf, die an die Bleche der Kolben anvulkanisiert sind und mindestens den jeweiligen Druckraum gegen weitere Bauteile der Mehrfachlamellenkupplung abdichten.

Die Kolben weisen Abdichtungen als Dichtlippen zur Abdichtung der Fliehölausgleichsräume aufweisen.

Die Kolben besitzen Abdichtungen als Laufflächen für die jeweiligen Fliehölausgleichskolben.

Die Mehrfachlamellenkupplungsanordnung hat einen Zahnkranz, der auf einer Zahnkranzträgerplatte an einer Hauptnabe angebracht ist, wobei der Zahnkranz einen Bauraum als Druckraum aufweist, in dem der Kolben der Kupplung, die eine Trennkupplung zwischen einem Verbrennungsmotor und einem Getriebe darstellt, mit seinem radialen Teil und einem axialen Anteil positioniert ist.

Die Mehrfachlamellenkupplungsanordnung ist als Dreifachlamellenkupplung ausgelegt mit einer ersten, einer zweiten und einer dritten Reibkupplung, die radial versetzt zueinander angeordnete Lamellenpakte auf Lamellenträgern aufweisen, mit einem ersten Kolben, einem zweiten Kolben und einem dritten Kolben zur Aktuierung der ersten, zweiten und dritten Reibkupplung, wobei ein erster, ein zweiter und ein dritter Fliehölausgleichskolben zusammen mit jeweils dem ersten, dem zweiten und dem dritten Kolben Fliehölausgleichsräume bildet, wobei der Kolben der mittleren Kupplung als einteiliges Blechbauteil mit drei Abdichtungen.

Radial versetzt zueinander bedeutet, dass man, wenn man einem Strahl weg von der Mittenachse A folgt, nacheinander auf die Fliehölausgleichsräume stößt, die auch in einem radialen Abstand voneinander angeordnet sind.

Dadurch ist ein sehr kompakter Aufbau bei minimaler axialer Ausdehnung gegeben.

### Beschreibung der Figuren

Figur 1 zeigt eine erfindungsgemäße Ausführungsform mit gemeinsamer Antriebslamellenträger für die Kupplungen K0 und K1,
Figur 2 zeigt eine Ausführungsform mit gemeinsamer Antriebslamellenträger für Kupplungen K1 und K2,
Figur 3 zeigt eine Ausführung mit einer Öldurchführung in der sich drehende Hauptnabe im Kupplungsgehäuse,
Figur 4 zeigt den modularen Aufbau,
Figur 5 zeigt eine weitere Ausführungsform,
Figur 6 zeigt ein Detail der Kolben.

Alle Ausführungsformen sind konzentrische Dreifachlamellenkupplungen mit axial kurzer Bauweise und einer kostenoptimierten Struktur durch Verwendung von Blecheinbauten.

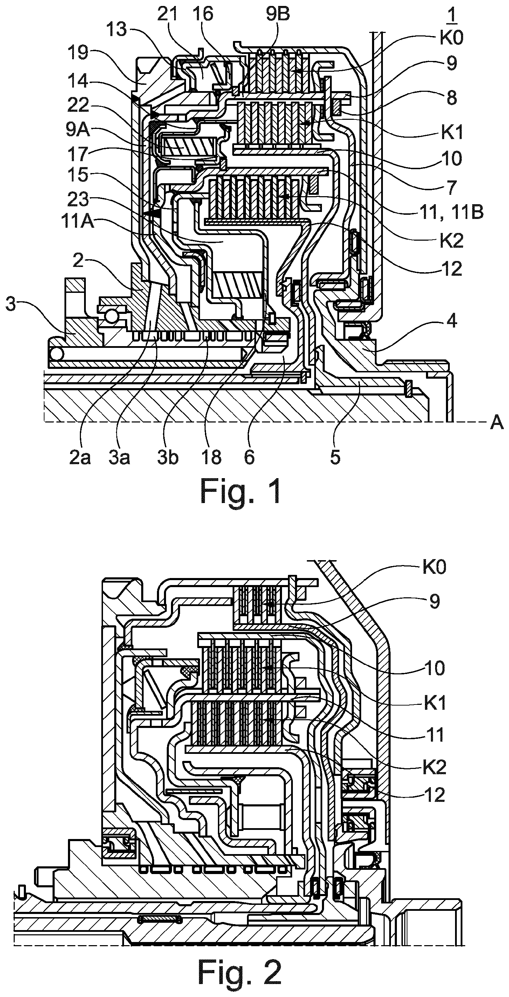

Figur 1 ist einen Dreifachlamellenkupplung 1 mit einer Kupplung K2, einer Kupplung K1 und einer Kupplung K0, die mit konzentrisch angeordneten Lamellenpaketen von innen nach außen angeordnet sind.

Die Lamellenpakte der drei Kupplungen K0, K1, K2 weisen in axialer Richtung gesehen keinen Versatz zueinander auf oder sind nur mit einem geringen Versatz zueinander verbaut.

Die Dreifachlamellenkupplung 1 weist einen Hauptnabe 2, die Öldurchführungen 2a aufweist. Die Ölzufuhr erfolgt über eine Drehdurchführung 3, die Öldurchführungen 3a aufweist, die von Kolbenringen 3b gedichtet werden.

Eine Eingangsnabe 4 umgreift eine erste Ausgangsnabe 5 und eine zweite Ausgangsnabe 6. An der Eingangsnabe 4 ist eine Stützscheibe 7 angebracht, die über eine Abstützung 8 mit einem gemeinsamen Lamellenträger 9 für die Kupplungen K0 und K1 verbunden ist. Diese Stützscheibe 7 ist dabei in Figur 9 nochmals herausgestellt.

Die Abstützung 8 und die Stützscheibe 7 ist in diesem Ausführungsbeispiel nach Fig. 9 mehrteilig aufgebaut.

Der gemeinsame Lamellenträger 9 dient als Innenlamellenträger der Kupplung K0 und als Außenlamellenträger der Kupplung K1. Der Innenlamellenträger 10 der Kupplung K1 ist mit der ersten Ausgangsnabe 5 verbunden. Die Kupplung K2 weist einen Außenlamellenträger 11 und einen Innenlamellenträger 12 auf, wobei der Innenlamellenträger 12 mit der zweiten Ausgangsnabe 6 in Verbindung steht.

Betätigt werden die drei Kupplungen K0, K1, K2 mit Hilfe eines ersten Kolbens 13, eines zweiten Kolbens 14 und eines dritten Kolbens 15. Die Kolben 13, 14, 15 bewegen sich in jeweiligen Druckräumen 40, 41, 42 gegen die Fliehölausgleichsräume 21, 22, 23. Alle drei Kolben 13, 14, 15 sind auf derselben Seite der Dreifachlamellenkupplung 1 angeordnet, die der Eingangsnabe 4 gegenüberliegt. Die Kolben 14, 15 sind dabei radial übereinander versetzt und liegen innerhalb von Korbabschnitten 9A, 11A der Lamellenträger 9, 11, die jeweils mit der Hauptnabe 2 verbunden sind. Die Abschnitte 9A und 11A verlaufen über einen großen radialen Bereich parallel zueinander, bis sie in rechtwinklig davon verlaufenden Bereiche 9B und 11B der Lamellenträger münden.

Ein Kolbenträger 19 für den ersten Kolben 13 verläuft ebenfalls parallel zu den radiale verlaufenden Abschnitten 9A und 11A der Lamellenträger.

Weiterhin weist die Dreifachlamellenkupplung 1 noch Fliehölausgleichskolben auf, einen ersten Fliehölausgleichskolben 16, einen zweiten Fliehölausgleichskolben 17 und einen dritten Fliehölausgleichskolben 18.

Der erste Kolben 13 und der erste Fliehölausgleichskolben 16 bilden einen ersten Fliehölausgleichsraum 21.

Der zweite Kolben 14 und der zweite Fliehölausgleichskolben 17 bilden einen zweiten Fliehölausgleichsraum 22.

Der dritte Kolben 15 und der dritte Fliehölausgleichskolben 18 bilden einen dritten Fliehölausgleichsraum 23.

Die Fliehölausgleichsräume 21, 22, 23 sind konzentrisch zueinander mit einem radialen Abstand zueinander angeordnet, wobei alle drei Fliehölausgleichsräumen 21, 22, 23 miteinander verbunden sind. Der radiale Versatz der Fliehölausgleichsräume, der auch keinen radialen Überlapp der Fliehölausgleichsräume zulässt, ermöglicht eine kompakte Bauweise in axialer Richtung.

Die äußeren Fliehölausgleichsräume werden über den dritten Fliehölausgleichsraum 23 befüllt, der über eine Öldurchführung 24 im dritten Kolben 15 sowie einen Öldurchführung 25 im Außenlamellenträger 12 der Kupplung K2 den zweiten Fliehölausgleichsraum 22 füllt. Der zweite Fliehölausgleichsraum 22 befüllt über einen Kanal 26 zwischen den Bauteilen des zweiten Kolbens 14 und eine Öffnung 27 im gemeinsamen Lamellenträger 9 den ersten Fliehölausgleichsraum 21.

Damit erhält man einen durchgängigen Fliehölstrom von der Hauptnabe 2 aus bis zum ersten Fliehölausgleichsraum 21.

In der Figure 2 wird eine alternative Lösung vorgestellt, die sich lediglich dadurch unterscheidet, dass ein gemeinsamer Lamellenträger 11 die beiden Kupplungen K1 und K2 trägt und die Kupplung K0 dagegen separat mit eigenen Innenlamellenträger 9 und Außenlamellenträger geführt ist.

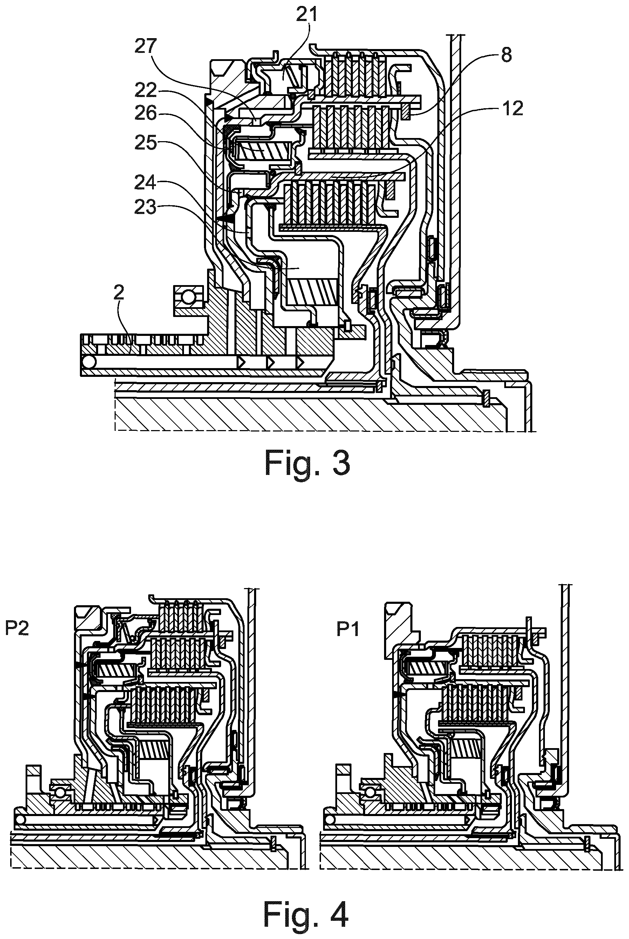

Figur 3 zeigt einen Ausführungsform, die im Wesentlichen der Kupplungsanordnung und Kühlölverläufe der Figur 1 entspricht.

Im Unterschied zur Lösung der Figur 1 ist die radiale Stützscheibe 7 nicht mehrteilig, sondern einteilig ausgeführt, was Kosten reduziert und in Figur 7 nochmals im Detail dargestellt ist.

Als Weiteren ist die Drehdurchführung 3 zur Öldurchführung durch die sich drehende Hauptnabe 2 im Kupplungsgehäuse ersetzt worden. Der Wegfall der Drehdurchführung 3 als separates Bauteil reduziert Kosten.

Die Dreifachlamellenkupplung 1 ist zur Ausgestaltung eines P2 Hybridantriebs ausgelegt und ermöglicht es der elektrischen Maschine, die ausgangsseitig von der der Kupplung K0 aber vor den Kupplungen des Doppelkupplungsgetriebes eingreift, zugkraftunterbrechungsfrei mit dem Doppelkupplungsgetriebe zu schalten.

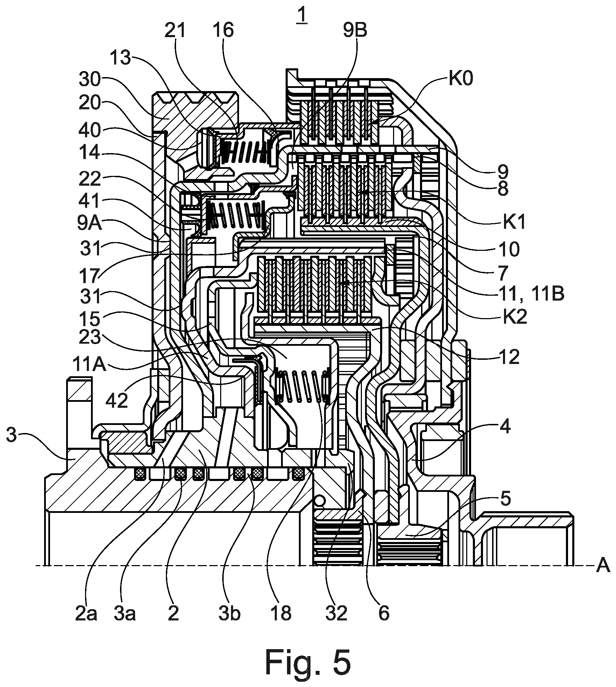

Figur 5 zeigt eine weitere Ausführungsform, in der die verwendeten Blechteile weiter optimiert sind.

Die Hauptnabe 2 ist als Drehteil ausgelegt und trägt unter anderen die Lamellenträger 9 und 11. Auch eine Zahnkranzträgerplatte 20 ist direkt mit der Hauptnabe 2 verbunden. Die Hauptnabe 2 ist mit einem möglichst geringen Durchmesser ausgelegt, um geringe Schweißdurchmesser für die zu verschweißenden Komponenten zu ermöglichen. Der Durchmesser der Schweißnähte und somit der Hauptnabe 2 sind dabei für die berechnete Belastung vorgegeben.

Die Zahnkranzträgerplatte 20 ist auf jeden Fall mit der Hauptnabe 2 verschweißt, während die Lamellenträger 9, 11 auch mit einem Presssitz verbunden sein können.

Auf der von der Hauptnabe 2 wegweisenden Außenradius der Zahnkranzträgerplatte 20 sitzt einen Zahnkranz 30, das zur Anbindung der elektrischen Maschine des Antriebsstrangs gehört.

Die Blechstanzsteile der Lamellenträger 9, 11 sowie die Zahnkranzträgerplatte 20 sind gegebenenfalls zu flexibel, um dem beaufschlagten Anpressdruck standzuhalten. Daher ist eine Steifigkeitserhöhung wünschenswert. Diese Steifigkeitserhöhung erreicht man mit einer Verschweißung 31 zwischen Segmenten wie der Zahnkranzträgerplatte 20 mit dem Lamellenträger 9 und dem Lamellenträger 9 mit dem Lamellenträger 11. Diese Versteifungen durch die Verschweißung 31 erfolgt im Bereich, der sich von der Hauptnabe 2 aus radial nach außen erstreckt, in dem die Segmente parallel zueinander verlaufen.

Je nach Auslegung der Dreifachlamellenkupplung 1 erfolgen die Verschweißungen beide oder alternativ nur einen der beiden Verschweißungen 31.

Eine weitere Verbesserung ergibt sich durch die Ausgestaltung des Hauptnabe 2 als Drehteil. Die Hauptnabe 2 ist ungehärtetes Material, das einfach zu bearbeiten ist. Diese Hauptnabe 2 mündet in Richtung auf die Ausgangsnaben 5,6, in einer Kante 32, die im Schnittbild als Nase wiedergegeben ist.

Die Kante ist einstückig mit der Hauptnabe 2 hergestellt und begrenzt den darunterliegenden Stauraum des Fliehöls und dient als Fliehölkante.

Wie in der Figur 4 dargestellt ist die Dreifachlamellenkupplung 1 so aufgebaut, dass auch die äußerste Kupplung K0 weggelassen werden kann und man damit einen P1 Hybridantrieb realisieren kann. Bei der P1-Auslegung sitzt der elektrische Motor noch vor Getriebe auf der Kurbelwelle, entspricht also funktional weitgehend der getriebeseitigen P2-Anordnung auf der Getriebeeingangswelle.

Der Bauraum bleibt dabei bei allem Ausführungsformen der Erfindung gleich, der Gesamtaufbau ebenfalls, es werden nur die der Kupplung K0 zugeordneten Bauteile weggelassen.

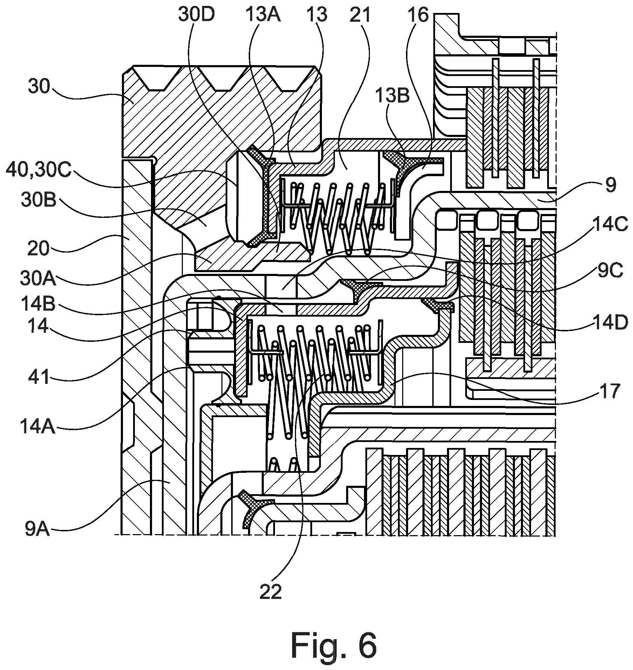

Figur 6 zeigt Details der Kolben 13 für die Kupplung K0 und Kolben 14 für die Kupplung K1.

Der Kolben 13 ist einteilig ausgeführt. Der Kolben verläuft zunächst radial bevor er in einer 90° Biegung in einen axialen Teil übergeht. Der axiale Teil enthält eine Stufe und endet stumpf ein einer erst in der Mitte eines Lamellenpaketes der Kupplung K0. Der radiale Teil und der erste axiale Teil des Kolbens 13 befindet sich in einem Bauraum 30C, der vollständig vom Zahnkranz 30 umfasst ist und den Kolbenraum bildet. Der Zahnkranz 30 besteht aus einer nach außen gerichteter Verzahnung, an der die elektrische Maschine angreift, sowie einem Arm 30D, der am Lamellenträger 9 befestigt ist. Die Kontaktstelle 30A zwischen dem Arm 30D und dem Lamellenträger 9 wird entweder miteinander verschweißt oder in einem Presssitz ausgeführt. Weiterhin weist das Zahnkranz 30 eine Durchführung 30B auf, in der Fliehöl geführt ist.

Der Kolben 13 weist eine Abdichtung 13 A auf, die an das Blechbauteil des Kolbens 13 anvulkanisiert ist. Die Dichtung 13A schließt den Kolben 13 gegen den Bauraum 30C ab.

Der Kolben 14 zur Betätigung der Kupplung K 1 ist aus einem einzigen Blechbauteil hergestellt. Der Kolben weist wieder einen radial nach außen geführten Bereich auf, der nach einer 90° Biegung in einem axial gestuften Verlauf mündet. Der Kolben 14 besitzt eine Durchführung 14B für den Fluss des Fliehöls. Die Durchführung 14B korrespondiert mit einer Öffnung 9C des Lamellenträgers 9.

Auch am Kolben 14 sind Dichtungen 14A anvulkanisiert, die den Druckraum abdichten.

Der Kolben 14 weist auch eine Abdichtung 14C auf, die den Fliehölausgleichsraum 22 gegen den Lamellenträger 9 abdichtet. Eine weitere Abdichtung 14D wird ebenfalls gleich mit dem Kolben hergestellt. Die Abdichtung 14D dient als Lauffläche für den Fliehölausgleichskolben 17.

### Bezugszeichen

1 Dreifachlamellenkupplung
2 Hauptnabe
2a ,3a, 24, 25 Öldurchführungen
3 Drehdurchführung
3b Kolbenringen
4 Eingangsnabe
5, 6 Ausgangsnabe
7 Stützscheibe
8 Abstützung
9, 10, 11, 12 Lamellenträger
9A, 11A Korbabschnitt
9B, 11B rechtwinklig verlaufende Bereiche der Lamellenträger
9C Öffnung
13, 14, 15 Kolben zur Aktuierung
14A, 14C, 14D Abdichtung
14B Durchführung
16, 17, 18 Fliehölausgleichskolben
19 Kolbenträger
20 Zahnkranzträgerplatte
21, 22, 23 Fliehölausgleichsräume
27 Öffnung
30 Zahnkranz
30A Kontaktstelle
30B Durchführung
30C Bauraum
30D Arm
K0, K1, K2 Reibkupplung
A Achse

## Patentansprüche

1. Mehrfachlamellenkupplungsanordnung mit mindesten zwei Reibkupplungen (K1, K2, K0), die radial versetzt zueinander angeordnete Lamellenpakte auf Lamellenträgern (9, 10, 11, 12) aufweisen, mit Kolben (13, 14, 15), die zur Aktuierung der Reibkupplungen (K1, K2, K0) dienen, wobei mindestens die Kolben (13, 14) zur Aktuierung Druckräume (40, 41, 42) gegen Fliehölausgleichsräumen (21, 22, 23) abgrenzen, **dadurch gekennzeichnet, dass** mindesten einer der Kolben (13, 14, 15) aus Blech einteilig hergestellt ist, und dass die Kolben zur Aktuierung (13, 14, 15) Abdichtungen (13A, 13B, 14A, 14C, 14D) aufweisen, die an die Bleche der Kolben zur Aktuierung (13, 14, 15) anvulkanisiert sind und mindestens den jeweiligen Druckraum (40, 41, 42) gegen weitere Bauteile der Mehrfachlamellenkupplung abdichten.

2. Mehrfachlamellenkupplungsanordnung nach Anspruch 1, **dadurch gekennzeichnet, dass** die Kolben zur Aktuierung (13, 14, 15) Abdichtungen (13B, 14C) als Dichtlippen zur Abdichtung der Fliehölausgleichsräume (21, 22, 23) aufweisen.

3. Mehrfachlamellenkupplungsanordnung nach Anspruch 1, **dadurch gekennzeichnet, dass** die Kolben zur Aktuierung (13, 14, 15) Abdichtungen (14D) als Laufflächen für die jeweiligen Fliehölausgleichskolben (16, 17, 18) besitzen.

4. Mehrfachlamellenkupplungsanordnung nach einem der vorhergehenden Ansprüche mit einem Zahnkranz (30), der auf einer Zahnkranzträgerplatte (20) an einer Hauptnabe (2) angebracht ist, **dadurch gekennzeichnet, dass** der Zahnkranz (30) einen Bauraum (30C) als Druckraum aufweist, in dem der Kolben (13) zur Aktuierung der Kupplung (K0), die eine Trennkupplung zwischen einem Verbrennungsmotor und einem Getriebe darstellt, mit seinem radialen Teil und einem axialen Anteil positioniert ist.

5. Mehrfachlamellenkupplungsanordnung als Dreifachlamellenkupplung (1) nach einem der vorhergehenden Ansprüche mit einer ersten, einer zweiten und einer dritten Reibkupplung (K0, K1, K2), die radial versetzt zueinander angeordnete Lamellenpakte auf Lamellenträgern (9, 10, 11, 12) aufweisen, mit einem ersten Kolben (13), einem zweiten Kolben (14) und einem dritten Kolben (15) zur Aktuierung der ersten, zweiten und dritten Reibkupplung (K0, K1, K2), wobei ein erster, ein zweiter und ein dritter Fliehölausgleichskolben (16, 17, 18) zusammen mit jeweils dem ersten, dem zweiten und dem dritten Kolben (13, 14, 15) zur Aktuierung Fliehölausgleichsräume (21, 22, 23) bildet, wobei der Kolben (14) der mittleren Kupplung (K1) als einteiliges Blechbauteil mit drei Abdichtungen (14A, 14C, 14D) ausgeführt ist.

## Claims

1. Assembly with several multiple lamellae clutches with at least two friction clutches (K1, K2, K0) which have lamellae packs disposed so as to be mutually radially offset on lamellae carriers (9, 10, 11, 12), having pistons (13, 14, 15) which serve for actuating the friction clutches (K1, K2, K0), wherein at least the pistons (13, 14) for actuation delimit pressure chambers (40, 41, 42) from centrifugal oil compensation chambers (21, 22, 23), **characterized in that** at least one of the pistons (13, 14, 15) is produced integrally from sheet metal, and **in that** the pistons for actuation (13, 14, 15) have seals (13A, 13B, 14A, 14C, 14D) which are vulcanized onto the sheet metal of the pistons for actuation (13, 14, 15), and seal at least the respective pressure chamber (40, 41, 42) in relation to further components of the multiple-lamellae clutch.

2. Assembly with several multiple lamellae clutches according to Claim 1, **characterized in that** the pistons for actuation (13, 14, 15) have seals (13B, 14C) as sealing lips for sealing off the centrifugal oil compensation chambers (21, 22, 23).

3. Assembly with several multiple lamellae clutches according to Claim 1, **characterized in that** the pistons for actuation (13, 14, 15) have seals (14D) as running surfaces for the respective centrifugal oil compensation pistons (16, 17, 18).

4. Assembly with several multiple lamellae clutches according to one of the preceding claims, having a gear ring (30) which is attached to a main hub (2) on a gear ring carrier plate (20), **characterized in that** the gear ring (30) has an installation space (30C) as a pressure chamber, in which the piston (13) for the actuation of the clutch (K0), the latter representing a separating clutch between an internal combustion engine and a transmission, is positioned by way of its radial part and an axial portion.

5. Assembly with several multiple lamellae clutches in the form of an assembly with three multiple lamellae clutches (1) according to one of the preceding claims, having a first, a second and a third friction clutch (K0, K1, K2) which have lamellae packs disposed so as to be mutually radially offset on lamellae carriers (9, 10, 11, 12), having a first piston (13), a second piston (14) and a third piston (15) for actuating the first, the second and the third friction clutch (K0, K1, K2), wherein a first, a second and a third centrifugal oil compensation piston (16, 17, 18), in each case conjointly with the first, the second and the third piston (13, 14, 15) for actuation, forms centrifugal oil compensation chambers (21, 22, 23), wherein the piston (14) of the central clutch (K1) is embodied as an integral sheet-metal component with three seals (14A, 14C, 14D).

## Revendications

1. Ensemble embrayage à disques multiples avec au moins deux embrayages à friction (K1, K2, K0), qui comportent des paquets de disques disposés avec un décalage radial les uns par rapport aux autres sur des porte-disques (9, 10, 11, 12), avec des pistons (13, 14, 15), qui servent à actionner les embrayages à friction (K1, K2, K0), au moins les pistons (13, 14) d'actionnement délimitant des chambres de pression (40, 41, 42) par rapport à des chambres de compensation d'huile centrifuge (21, 22, 23), **caractérisé en ce qu'**au moins un des pistons (13, 14, 15) est fabriqué d'une seule pièce en tôle, et que les pistons d'actionnement (13, 14, 15) comportent des joints d'étanchéité (13A, 13B, 14A, 14C, 14D), qui sont appliqués par vulcanisation sur les tôles des pistons d'actionnement (13, 14, 15) et étanchéifient au moins la chambre de pression (40, 41, 42) respective par rapport à d'autres composants de l'embrayage à disques multiples.

2. Ensemble embrayage à disques multiples selon la revendication 1, **caractérisé en ce que** les pistons d'actionnement (13, 14, 15) comportent des joints d'étanchéité (13B, 14C) en tant que lèvres d'étanchéité pour étanchéifier les chambres de compensation d'huile centrifuge (21, 22, 23).

3. Ensemble embrayage à disques multiples selon la revendication 1, **caractérisé en ce que** les pistons d'actionnement (13, 14, 15) possèdent des joints d'étanchéité (14D) en tant que surfaces de roulement pour les pistons de compensation d'huile centrifuge (16, 17, 18) respectifs.

4. Ensemble embrayage à disques multiples selon l'une des revendications précédentes, avec une couronne dentée (30), qui est installée sur une plaque de support (20) de couronne dentée sur un moyeu principal (2), **caractérisé en ce que** la couronne dentée (30) comporte un espace de montage (30C) en tant que chambre de pression, dans lequel le piston (13) d'actionnement de l'embrayage (K0), qui constitue un embrayage de coupure entre un moteur à combustion interne et une transmission, est positionné par sa partie radiale et une partie axiale.

5. Ensemble embrayage à disques multiples sous forme d'embrayage à trois disques (1) selon l'une des revendications précédentes, avec un premier, un deuxième et un troisième embrayage à friction (K0, K1, K2) qui comportent des paquets de disques disposés avec un décalage radial les uns par rapport aux autres sur des porte-disques (9, 10, 11, 12), avec un premier piston (13), un deuxième piston (14) et un troisième piston (15) pour actionner le premier, le deuxième et le troisième embrayage à friction (K0, K1, K2), un premier, un deuxième et un troisième piston de compensation d'huile centrifuge (16, 17, 18) formant conjointement avec respectivement le premier, le deuxième et le troisième piston (13, 14, 15) d'actionnement des chambres de compensation d'huile centrifuge (21, 22, 23), le piston (14) de l'embrayage central (K1) étant réalisé comme un composant en tôle d'une seule pièce avec trois joints d'étanchéité (14A, 14C, 14D).
